(19) Europäisches Patentamt / European Patent Office / Office européen des brevets

(11) **EP 3 537 428 A1**

(12) **EUROPEAN PATENT APPLICATION**

(43) Date of publication:
**11.09.2019 Bulletin 2019/37**

(51) Int Cl.:
**G10K 11/168** (2006.01)      **B32B 1/00** (2006.01)
**E04B 1/82** (2006.01)

(21) Application number: **18159996.0**

(22) Date of filing: **05.03.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Omya International AG
4665 Oftringen (CH)**

(72) Inventor: **BURI, Matthias
4852 Rothrist (CH)**

(74) Representative: **Boos, Melanie
Maiwald Patentanwalts- und
Rechtsanwaltsgesellschaft mbH
Elisenhof
Elisenstraße 3
80335 München (DE)**

(54) **NOISE AND/OR SOUND REDUCING MULTILAYER UNIT**

(57)    The invention relates to a noise and/or sound-reducing multilayer unit for reducing noise having a wavelength from 50 to 15 000 Hz, preferably from 100 to 10 000 Hz, and most preferably from 100 to 7 000 Hz, a method for the preparation of the noise and/or sound-reducing multilayer unit, a noise and/or sound-protection wall comprising one or more noise and/or sound-reducing multilayer unit(s) as well as the use of an inorganic powder material as noise and/or sound-reducing material or for the preparation of a noise and/or sound-protection wall.

**Figures**

R = sound receiver (where the noise is measured)
Q = sound generator (2 loudspeakers)
A = empty chamber
B = chamber receiving the insulator material
■ ■ ■ = wire grid

Fig. 1

Printed by Jouve, 75001 PARIS (FR)

**Description**

The invention relates to a noise and/or sound reducing multilayer unit for reducing noise and/or sound having a wavelength from 50 to 15 000 Hz, preferably from 100 to 10 000 Hz, and most preferably from 100 to 7 000 Hz, a method for the preparation of the noise and/or sound-reducing multilayer unit, a noise and/or sound-protection wall comprising one or more noise and/or sound-reducing multilayer unit(s) as well as the use of an inorganic powder material as noise and/or sound-reducing material or for the preparation of a noise and/or sound-protection wall.

Noise and/or sound protection walls are used in a great variety of fields where a noise and/or sound reduction or complete noise and/or sound deadening is desired in order to protect human and/or animal subjects from the harmful effects of noise and/or sound. The fields thus cover industrial areas such as noise and/or sound-effecting industrial plants, public areas such as airports, train areas, highways, libraries, sports areas, kindergardens, playgrounds and schools as well as private areas such as properties, bed rooms, bathrooms, living rooms, hobby rooms, music rooms, cellars, and garden areas. In this regard, noise and/or sound-protection walls build up of individual building units are gaining more and more interest. An individual building unit, which, through stacking and/or juxtaposing several units, enables a quick and easy build-up of a noise and/or sound-protection wall which reduces the noise sensation on one side of the wall. In its "basic" form, which is the most commonly widespread one, such an individual building unit consists of a box-shaped cage whose bottom, four side walls, and, if appropriate, the lid are made from flat wire mesh pieces fixed respectively to each other, typically using clips, steel wire ties and/or welding. The cage is then filled with crushed stone or, more generally, a similar granular material, whose aggregate is retained within the cage since it cannot pass through the holes in the mesh. Stacked and/or juxtaposed individual building units can be bound together using clips or wire ties in order to build-up a wall.

DE 20 2006 003 050 refers to a wire basket having a floor and side walls and at least one sound absorbing coating that is made up of at least one flexible container filled with sand. The flexible container is in the form of a sack that consists of a fleece. The sound absorbing coating lies at a distance behind the visible side of the basket.

FR 2 902 808 A1 refers to a wall having courses with modules, whose cage is filled with a filling material e.g. crushed stone, and is formed by a metallic trellis. The courses are arranged one behind the other, and the modules are stacked over each other. A core made of acoustic material is inserted between the courses, and extends along length and height of the wall while acting as a continuous barrier. The acoustic material can be concrete, wood, polystyrene or steel. A layer made of geotextile, geosynthetic or acoustic absorbing material is inserted between the core and filling material. The advantage of this solution is to obtain an acoustic insulation core that extends continuously all along the noise barrier and to the full height. However, that solution is especially costly and tricky, especially because it doubles the number of required modules and since it takes a long time to execute.

European patent application EP3214224 A1 refers to a gabion comprising a cage basically box-shaped, made up of a bottom, two frontal walls and two side walls. That bottom, frontal and side walls are all formed from meshes respectively that are fixed to each other; two compartmenting partitions, that each connect the side walls to one other within the interior of the cage so that the internal volume of the cage is divided into: two frontal compartments that are each filled with a filler material made up of aggregate that cannot pass through the respective meshes of the bottom, the frontal or the side walls, nor through the compartmenting partitions in such a way that it is retained within those frontal compartments, and an intermediate compartment, bounded by the compartmenting partitions and which is able to receive a granular acoustic insulation material; and at least one lifting partition, that fixedly connects the frontal walls to each other within the cage extending through each of the frontal compartments and the intermediate compartment, which, opposite the bottom, is provided with at least one grab handle, and which, for the part that is set out in the intermediate compartment, is suited to allowing the acoustic insulation material granules to pass through it in such a way that the acoustic insulation material may spread freely, within the intermediate compartment, on either side of the lifting partition.

However, there is still a need in the art for providing noise and/or sound-reducing means that offer very good acoustic properties. Furthermore, it is desired that the noise and/or sound-reducing means are versatile in use and that they can be build-up by private individuals as well as professionals such as civil engineers and workers in a fast, easy and individual manner.

Thus, it is an objective of the present invention to provide a noise and/or sound-reducing unit. In particular, it is thus an objective of the present invention to provide a noise and/or sound-reducing unit which provides very good acoustic properties. It is still a further objective of the present invention to provide a noise and/or sound-reducing unit that can be build-up to a noise and/or sound-protection wall by private individuals as well as professionals such as civil engineers and workers in a fast, easy and individual manner. It is another objective of the present invention to provide a noise and/or sound-reducing unit that is versatile in use and can be used in a great variety of fields.

These and other objectives of the present invention can be solved by a noise and/or sound-reducing multilayer unit, a noise and/or sound-protection wall, a method and the uses as described in the present invention and defined in the claims.

According to one aspect of the present application, a noise and/or sound-reducing multilayer unit for reducing noise and/or sound having a wavelength from 50 to 15 000 Hz, preferably from 100 to 10 000 Hz, and most preferably from 100 to 7 000 Hz is provided. The noise and/or sound-reducing multilayer unit comprises at least one solid back layer and at least one solid front layer which are arranged such that one or more space(s) is/are formed between the solid back and front layers, and the one or more space(s) is/are at least partially filled with an inorganic powder material forming one or more noise and/or sound-reducing layer(s), wherein the one or more inorganic powder material forming noise and/or sound-reducing layer(s) has/have in sum an average thickness of 0.1 to 100 cm, wherein

a) the at least one solid back layer and the at least one solid front layer are configured such that they are suitable for holding the one or more noise and/or sound-reducing layer(s) in position, and
b) the inorganic powder material has

i) a bulk density in the range from 0.4 to 2.0 kg/L, and
ii) a weight particle size $d_{90}$ of < 2 000 $\mu$m, and
iii) a weight median particle size $d_{50}$ in the range from 0.2 to 1 500 $\mu$m, and
iv) a weight particle size $d_{10}$ in the range from 0.1 to 200 $\mu$m, and
v) a steepness factor $[(d_{10}/d_{90})* 100]$ in the range from 2 to 50, and
vi) a moisture content of $\leq$ 15.0 wt.-%, based on the total weight of the inorganic powder material.

According to one embodiment, the noise and/or sound-reducing multilayer unit further comprises a) one or more intermediate layer(s) positioned between the at least one solid front and at least one solid back layer and separating two adjacent noise and/or sound-reducing layers from each other, and/or b) one or more side layer(s) configured such that the one or more noise and/or sound-reducing layer(s) are hold in position, and/or c) a top layer, and/or d) a bottom layer and e) optionally at least one layer is of honeycomb shape.

According to another embodiment, the multilayer unit is a three- to twenty-layer unit, preferably a three- to ten-layer unit, and more preferably a three- to five-layer unit.

According to yet another embodiment, the at least one solid back layer and the at least one solid front layer of the noise and/or sound-reducing multilayer unit are the same or different, preferably the at least one solid back layer and the at least one solid front layer are made of metal and/or wood and/or concrete and/or brick stone and/or plastic, particularly the at least one solid back layer and the at least one solid front layer are in plate form and/or wire form and/or of honeycomb shape oriented vertically, horizontally or in any form.

According to one embodiment, each of the at least one solid back layer and at least one solid front layer a) has the same or different stiffness, preferably a stiffness of at least 10 mNm, more preferably of at least 100 mNm, and most preferably of at least 500 mNm, and/or b) has the same or different average thickness, preferably an average thickness in the range from 1 to 120 cm, more preferably in the range from 2 to 100 cm, more preferably from 5 to 50 cm.

According to another embodiment, a) the one or more noise and/or sound-reducing layer(s) comprise(s) of at least 90 wt.% of the inorganic powder material, and/or b) the inorganic powder material is selected from the group comprising baryt, such as natural or synthetic baryt, talc, mica, clay, kaolin, titanium dioxide, bentonite, magnesite, satin white, silicates, calcium carbonate-comprising materials, such as natural calcium carbonate, synthetic calcium carbonate, surface modified calcium carbonate and materials comprising calcium carbonate such as dolomite or mixed carbonate based materials of such as mixture, and mixtures thereof; preferably baryt, such as natural baryt or synthetic baryt, talc, mica, clay, bentonite, silicates, calcium carbonate-comprising materials, such as natural calcium carbonate, more preferably marble, limestone and/or chalk, and materials comprising calcium carbonate such as dolomite, and mixtures thereof.

According to yet another embodiment, the inorganic powder material has i) a bulk density in the range from 0.6 to 1.8 kg/L, and/or ii) a moisture content of < 5 wt.%, preferably of < 2 wt.-%, based on the total weight of the inorganic powder material, and/or iii) a weight particle size $d_{90}$ of < 1 500 $\mu$m, preferably in the range from 4 to 1 500 $\mu$m, more preferably in the range from 10 to 1 000 $\mu$m, and iv) a weight median particle size $d_{50}$ in the range from 0.2 $\mu$m to 1 200 $\mu$m, preferably in the range from 0.2 to 900 $\mu$m, more preferably in the range from 0.2 to 750 $\mu$m, most preferably in the range from 0.2 to 500 $\mu$m, and v) a weight particle size $d_{10}$ in the range from 0.1 to 175 $\mu$m, preferably in the range from 0.1 to 150 $\mu$m.

According to one embodiment, the inorganic powder material has a steepness factor $[(d_{10}/d_{90})*100]$ in the range from 2.5 to 30.

According to another embodiment, the inorganic powder material has a ratio of steepness factor to bulk density, expressed by a quotient obtained by dividing the steepness factor $[(d_{10}/d_{90})*100]$ to bulk density [steepness factor/bulk density (kg/L)], of $\leq$ 30, preferably in the range from 0.5 to 25, more preferably in the range from 0.8 to 20 and most preferably in the range from 1 to 15.

According to yet another embodiment, the noise and/or sound-reducing layer formed by the inorganic powder material has an average layer thickness in the range from 1 to 100 cm, preferably in the range from 10 to 80 cm, more preferably in the range from 12 to 60 cm and most preferably in the range from 13 to 40 cm.

According to one embodiment, the inorganic powder material comprises a hydrophilic or hydrophobic treatment layer on the surface of the inorganic powder material.

According to a further aspect of the present invention, a method for the preparation of a noise and/or sound-reducing multilayer unit is provided. The method comprises at least the steps of:

a) providing at least one solid back layer and at least one solid front layer as defined herein,
b) providing an inorganic powder material as defined herein,
c) arranging the back and front layers of step a) such that a space is formed between the back and front layers, and
d) filling the inorganic powder material of step b) at least partially into the space formed between the back and front layers such as to form a noise and/or sound-reducing multilayer unit.

According to one embodiment of the inventive method, the method further comprises i) a step c1), preferably carried out after step c) and/or before step d), of arranging one or more intermediate layer(s) such that they are positioned between the at least one solid front layer and the at least one solid back layer, and/or ii) a step c2), preferably carried out after step c) and/or before step d), of arranging one or more side layer(s) such that they are positioned at one or more open sides of the noise and/or sound-reducing multilayer unit, and/or iii) a step c3) preferably carried out after step d), of arranging a top layer such that it is positioned on the top of the noise and/or sound-reducing multilayer unit, and/or iv) a step c4), preferably carried out before step c), of arranging a bottom layer such that it is positioned at the bottom of the noise and/or sound-reducing multilayer unit.

According to another aspect of the present invention, a noise and/or sound-protection wall comprising one or more noise and/or sound-reducing multilayer unit(s) as defined herein is provided.

According to a further aspect of the present invention, the use of an inorganic powder material as defined herein as noise and/or sound-reducing material is provided.

According to a still further aspect of the present invention, the use of an inorganic powder material as defined herein for the preparation of a noise and/or sound-protection wall is provided.

Where the term "comprising" is used in the present description and claims, it does not exclude other elements. For the purposes of the present invention, the term "consisting of' is considered to be a preferred embodiment of the term "comprising of'. If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that, e.g. an embodiment must be obtained by e.g. the sequence of steps following the term "obtained" even though such a limited understanding is always included by the terms "obtained" or "defined" as a preferred embodiment.

The term "noise and/or sound" refers to any sound and/or noise that is above the hearing threshold of human beings, i.e. 0 dB (about $20 \times 10^{-6}$ Pa). It is appreciated that the terms "noise" and "sound" are interchangeable.

In the meaning of the present invention, the term "thickness", if not indicated otherwise, refers to the depths of the corresponding layer or part.

When in the following reference is made to preferred embodiments or technical details of the inventive noise and/or sound-reducing multilayer unit, it is to be understood that these preferred embodiments or technical details also refer to the inventive noise and/or sound-protection wall, inventive method and the inventive uses as defined herein (as far as applicable).

As set out above, the inventive noise and/or sound-reducing multilayer unit comprises at least one solid back layer and at least one solid front layer which are arranged such that one or more space(s) is/are formed between the solid back and front layers, and the one or more space(s) is/are at least partially filled with an inorganic powder material forming one or more noise and/or sound-reducing layer(s). In the following, it is referred to further details of the present invention and especially the foregoing components of the inventive noise and/or sound-reducing multilayer unit. Those skilled in the art will understand that many embodiments described herein can be combined or applied together.

Noise and/or sound-reducing multilayer unit

A noise and/or sound-reducing multilayer unit for reducing noise having a wavelength from 50 to 15 000 Hz, preferably from 100 to 10 000 Hz, and most preferably from 100 to 7 000 Hz is provided, comprising at least one solid back layer and at least one solid front layer which are arranged such that one or more space(s) is/are formed between the solid back and front layers, and the one or more space(s) is/are at least partially filled with an inorganic powder material forming one or more noise and/or sound-reducing layer(s), wherein the one or more inorganic powder material forming noise and/or sound-reducing layer(s) has/have in sum an average thickness of 0.1 to 100 cm, wherein

a) the at least one solid back layer and the at least one solid front layer are configured such that they are suitable for holding the one or more noise and/or sound-reducing layer(s) in position, and
b) the inorganic powder material has

i) a bulk density in the range from 0.4 to 2.0 kg/L, and
ii) a weight particle size $d_{90}$ of < 2 000 $\mu$m, and
iii) a weight median particle size $d_{50}$ in the range from 0.2 to 1 500 $\mu$m, and
iv) a weight particle size $d_{10}$ in the range from 0.1 to 200 $\mu$m, and
v) a steepness factor $[(d_{10}/d_{90})* 100]$ in the range from 2 to 50, and
vi) a moisture content of $\leq$ 15.0 wt.-%, based on the total weight of the inorganic powder material.

Thus, the noise and/or sound-reducing multilayer unit is suitable for reducing noise having a wavelength from 50 to 15 000 Hz. Preferably, the noise and/or sound-reducing multilayer unit is suitable for reducing noise having a wavelength from 100 to 10 000 Hz, and most preferably from 100 to 7 000 Hz.

It is appreciated that the noise and/or sound-reducing multilayer unit at least partially reduces the noise and/or sound such that a human or animal subject on the other side of the noise and/or sound-reducing multilayer unit, or a noise and/or sound-protection wall comprising several noise and/or sound-reducing multilayer units, is not negatively affected by the noise and/or sound.

The noise and/or sound-reducing multilayer unit comprises at least one solid back layer and at least one solid front layer which are arranged such that one or more space(s) is/are formed between the solid back and front layers.

The term "at least one" solid back layer in the meaning of the present invention means that the noise and/or sound-reducing multilayer unit comprises, preferably consists of, one or more solid back layer(s).

In one embodiment of the present invention, the noise and/or sound-reducing multilayer unit comprises, preferably consists of, one solid back layer. Alternatively, the noise and/or sound-reducing multilayer unit comprises, preferably consists of, two or more solid back layers. For example, the noise and/or sound-reducing multilayer unit comprises, preferably consists of, two or three solid back layers.

Preferably, the noise and/or sound-reducing multilayer unit comprises, preferably consists of, one solid back layer.

The term "at least one" solid front layer in the meaning of the present invention means that the noise and/or sound-reducing multilayer unit comprises, preferably consists of, one or more solid front layer(s).

In one embodiment of the present invention, the noise and/or sound-reducing multilayer unit comprises, preferably consists of, one solid front layer. Alternatively, the noise and/or sound-reducing multilayer unit comprises, preferably consists of, two or more solid front layers. For example, the noise and/or sound-reducing multilayer unit comprises, preferably consists of, two or three solid front layers. Preferably, the noise and/or sound-reducing multilayer unit comprises, preferably consists of, one solid front layer.

In one embodiment, the noise and/or sound-reducing multilayer unit comprises one solid back layer and one solid front layer.

It is appreciated that the at least one solid back layer and at least one solid front layer are arranged such that a space is formed between the solid back and front layers. That is to say, the at least one solid back layer and at least one solid front layer are preferably arranged such that the distance between the back and front layers is almost even at any point. More preferably, the at least one solid back layer and at least one solid front layer are arranged such that the back and front layers are almost parallel to each other.

It is appreciated that the at least one solid back layer and the at least one solid front layer of the noise and/or sound-reducing multilayer unit are the same or different.

In one embodiment, the at least one solid back layer and the at least one solid front layer are made of metal and/or wood and/or concrete and/or brick stone and/or plastic. For example, the at least one solid back layer and the at least one solid front layer are the same and are made of metal.

It is to be noted that the at least one solid back layer and the at least one solid front layer can be of any form known in the art. For example, the at least one solid back layer and the at least one solid front layer are in plate form and/or wire form and/or of honeycomb shape oriented vertically, horizontally or in any form. Preferably, the at least one solid back layer and the at least one solid front layer are of honeycomb shape oriented vertically, horizontally or in any form.

Alternatively, the at least one solid back layer and the at least one solid front layer are in plate form.

It is appreciated that the at least one solid back layer and at least one solid front layer are solid. That is to say, each of the at least one solid back layer and at least one solid front layer is of a stiffness that is suitable to hold the one or more noise and/or sound-reducing layer(s) in position, i.e. without relevant deformation of the noise and/or sound-reducing multilayer units' shape.

For example, each of the at least one solid back layer and at least one solid front layer has a stiffness of at least 10 mNm. Preferably, each of the at least one solid back layer and at least one solid front layer has a stiffness of at least 100 mNm, more preferably of at least 500 mNm. For example, each of the at least one solid back layer and at least one solid front layer has a stiffness in the range from 500 to 3 000 mNm.

It is appreciated that the at least one solid back layer and at least one solid front layer have the same or different stiffness. For example, the at least one solid back layer and at least one solid front layer have different stiffness. However, in view of production and cost efficiency as well as stability of the noise and/or sound-reducing multilayer unit it is preferred that the at least one solid back layer and at least one solid front layer have the same stiffness.

Additionally or alternatively, the at least one solid back layer and at least one solid front layer have an average thickness in the range from 1 to 120 cm, more preferably in the range from 2 to 100 cm, more preferably from 5 to 50 cm.

It is appreciated that the at least one solid back layer and at least one solid front layer have the same or different average thickness. For example, each of the at least one solid back layer and at least one solid front layer has different average thickness. However, in view of production and cost efficiency as well as stability of the noise and/or sound-reducing multilayer unit it is preferred that each of the at least one solid back layer and at least one solid front layer has the same average thickness.

It is required that a space is formed between the solid back and front layers which is at least partially filled with an inorganic powder material forming one or more noise and/or sound-reducing layer(s).

In one embodiment of the present invention, the noise and/or sound-reducing multilayer unit comprises, preferably consists of, one noise and/or sound-reducing layer. Alternatively, the noise and/or sound-reducing multilayer unit comprises, preferably consists of, two or more noise and/or sound-reducing layers. For example, the noise and/or sound-reducing multilayer unit comprises, preferably consists of, two or three or four or five or six noise and/or sound-reducing layers. Preferably, the noise and/or sound-reducing multilayer unit comprises, preferably consists of, two or more noise and/or sound-reducing layers.

Thus, the noise and/or sound-reducing multilayer unit is in its simplest arrangement a three-layer unit. This embodiment comprises one solid back layer and one solid front layer and one noise and/or sound-reducing layer.

Alternatively, the noise and/or sound-reducing multilayer unit comprises one solid back layer and one solid front layer and two or more noise and/or sound-reducing layers. Thus, the noise and/or sound-reducing multilayer unit forms in this embodiment at least a four-layer unit.

In one embodiment, two or more noise and/or sound-reducing multilayer units, e.g. a three-layer unit or at least a four-layer unit, are combined to build up bigger arrangements.

It is to be noted that the number of units can be adapted to the specific needs and can thus vary in a great number. However, it is appreciated that the aim of the present invention is typically achieved if the noise and/or sound-reducing multilayer unit is a three- to twenty-layer unit.

In one embodiment, the multilayer unit is thus a three- to ten-layer unit. Preferably, the noise and/or sound-reducing multilayer unit is a three- to five-layer unit, and more preferably a three- or four-layer unit.

If the noise and/or sound-reducing multilayer unit comprises two or more noise and/or sound-reducing layers, it is preferred that these layers are separated from each other by intermediate layer(s).

Thus, if the noise and/or sound-reducing multilayer unit comprises five or more layers, the noise and/or sound-reducing multilayer unit preferably further comprises one or more intermediate layer(s) positioned between the at least one solid front and at least one solid back layer and separating two adjacent noise and/or sound-reducing layers from each other.

That is to say, the one or more intermediate layer(s) are preferably positioned between the at least one solid front and at least one solid back layer such that the intermediate layer(s) are in parallel to the at least one solid front and at least one solid back layer.

In one embodiment, the intermediate layer(s) are positioned between the at least one solid front and at least one solid back layer such that even spaces between the respective layers are formed such that each noise and/or sound-reducing layer is of about the same average thickness. Alternatively, the intermediate layer(s) are positioned between the at least one solid front and at least one solid back layer such that smaller or bigger spaces between the respective layers are formed i.e. each noise and/or sound-reducing layers is of a different average thickness. However, it is also possible that the intermediate layer(s) are positioned between the at least one solid front and at least one solid back layer such that at least three spaces between the respective layers are formed such that two or more noise and/or sound-reducing layers are of about the same average thickness and one or more noise and/or sound-reducing layer(s) is/are of a different average thickness, i.e. smaller or bigger.

It is to be noted that the one or more intermediate layer(s) can be arranged in the noise and/or sound-reducing multilayer unit in horizontal and/or vertical and/or diagonal alignment as regards the direction of the noise and/or sound. Preferably, the one or more intermediate layer(s) are arranged in the noise and/or sound-reducing multilayer unit in vertical and/or diagonal alignment as regards the direction of the noise and/or sound. For example, the one or more intermediate layer(s) are arranged in the noise and/or sound-reducing multilayer unit in vertical and diagonal alignment as regards the direction of the noise and/or sound. Alternatively, the one or more intermediate layer(s) are arranged in the noise and/or sound-reducing multilayer unit in vertical or diagonal alignment as regards the direction of the noise and/or sound.

In order to hold the one or more noise and/or sound-reducing layer(s) in position, the noise and/or sound-reducing multilayer unit may comprise one or more side layer(s).

In one embodiment, the noise and/or sound-reducing multilayer unit comprises one side layer. This is preferably the case if the noise and/or sound-reducing multilayer unit is a terminating unit of a noise and/or sound-protection wall which is made of several noise and/or sound-reducing multilayer units.

Alternatively, the noise and/or sound-reducing multilayer unit comprises two side layers. Such a noise and/or sound-reducing multilayer unit comprising two side layers may be used as such or as part of a noise and/or sound-protection wall.

Furthermore, the noise and/or sound-reducing multilayer unit may comprise a top layer and/or a bottom layer.

In one embodiment, the noise and/or sound-reducing multilayer unit comprises a top layer or a bottom layer, preferably a bottom layer. Alternatively, the noise and/or sound-reducing multilayer unit may comprise a top layer and a bottom layer.

If the noise and/or sound-reducing multilayer unit is part of a noise and/or sound-protection wall, it is appreciated that the noise and/or sound-reducing multilayer units can be configured such that the units at the top of the wall comprise a top layer, whereas the units at the bottom of the wall comprise a bottom layer. Alternatively, each noise and/or sound-reducing multilayer unit being part of a noise and/or sound-protection wall can be configured such that they comprise a top layer and a bottom layer.

It is appreciated that the one or more intermediate layer(s) and/or the one or more side layer(s) and/or the top layer and/or the bottom layer can be made of the same or different material as the at least one solid back layer and the at least one solid front layer of the noise and/or sound-reducing multilayer unit.

Thus, the one or more intermediate layer(s) and/or the one or more side layer(s) and/or the top layer and/or the bottom layer is/are made of metal and/or wood and/or concrete and/or brick stone and/or plastic. For example, the one or more intermediate layer(s) and/or the one or more side layer(s) and/or the top layer and/or the bottom layer is/are made of metal.

It is to be noted that the one or more intermediate layer(s) and/or the one or more side layer(s) and/or the top layer and/or the bottom layer can be of any form known in the art. For example, the one or more intermediate layer(s) and/or the one or more side layer(s) and/or the top layer and/or the bottom layer is/are in plate form and/or wire form and/or of honeycomb shape oriented vertically, horizontally or in any form. Preferably, the one or more intermediate layer(s) and/or the one or more side layer(s) and/or the top layer and/or the bottom layer is/are of honeycomb shape oriented vertically, horizontally or in any form.

It is preferred that at least one layer is of honeycomb shape. Thus, it is preferred that the at least one solid back layer and/or the at least one solid front layer, and/or, if present, the one or more intermediate layer(s) and/or the one or more side layer(s) and/or the top layer and/or the bottom layer is/are of honeycomb shape.

It is appreciated the one or more intermediate layer(s) and/or the one or more side layer(s) and/or the top layer and/or the bottom layer is/are solid. That is to say, the one or more intermediate layer(s) and/or the one or more side layer(s) and/or the top layer and/or the bottom layer is/are of a stiffness that is suitable to hold the one or more noise and/or sound-reducing layer(s) in position, i.e. without relevant deformation of the noise and/or sound-reducing multilayer units' shape.

For example, the one or more intermediate layer(s) and/or the one or more side layer(s) and/or the top layer and/or the bottom layer has/have a stiffness of at least 10 mNm. Preferably, the one or more intermediate layer(s) and/or the one or more side layer(s) and/or the top layer and/or the bottom layer has/have a stiffness of at least 100 mNm, more preferably of at least 500 mNm. For example, the one or more intermediate layer(s) and/or the one or more side layer(s) and/or the top layer and/or the bottom layer has/have a stiffness in the range from 500 to 3 000 mNm.

It is appreciated that the one or more intermediate layer(s) and/or the one or more side layer(s) and/or the top layer and/or the bottom layer has the same or different stiffness compared to the at least one solid back layer and at least one solid front layer. For example, the one or more intermediate layer(s) and/or the one or more side layer(s) and/or the top layer and/or the bottom layer and the at least one solid back layer and at least one solid front layer have different stiffness. However, in view of production and cost efficiency as well as stability of the noise and/or sound-reducing multilayer unit it is preferred that the one or more intermediate layer(s) and/or the one or more side layer(s) and/or the top layer and/or the bottom layer and the at least one solid back layer and at least one solid front layer have the same stiffness.

Additionally or alternatively, the one or more intermediate layer(s) and/or the one or more side layer(s) and/or the top layer and/or the bottom layer has/have an average thickness in the range from 1 to 120 cm, more preferably in the range from 2 to 100 cm, more preferably from 5 to 50 cm.

It is appreciated that the one or more intermediate layer(s) and/or the one or more side layer(s) and/or the top layer and/or the bottom layer has/have the same or different average thickness compared to the at least one solid back layer and at least one solid front layer. For example, that the one or more intermediate layer(s) and/or the one or more side layer(s) and/or the top layer and/or the bottom layer has/have a different average thickness than the at least one solid back layer and at least one solid front layer. However, in view of production and cost efficiency as well as stability of the noise and/or sound-reducing multilayer unit it is preferred that the one or more intermediate layer(s) and/or the one or more side layer(s) and/or the top layer and/or the bottom layer and the at least one solid back layer and at least one solid front layer have the same average thickness.

In practice, the alignment, both horizontal and vertical, of the one or more intermediate layer(s) and/or the one or more side layer(s) and/or the top layer and/or the bottom layer and/or the at least one solid back layer and/or at least one solid front layer do not have to be strictly precise.

As required for the present invention, one or more noise and/or sound-reducing layer(s) is/are formed between the at least one solid back layer and at least one solid front layer in that the formed space between the layers is at least partially filled with an inorganic powder material.

The term "at least partially" in the meaning of the present invention refers to a space that is filled to at least 10 vol.-%, based on the total volume of the space, with a particulate material. Preferably, a space that is filled to at least 30 vol.-%, more preferably at least 50 vol.-% and most preferably at least 70 vol.-%, for example 90 to 95 vol.-% based on the total volume of the space, with the inorganic powder material in taped, partially taped or non-taped form. For example, a space that is filled to at least 30 vol.-%, more preferably at least 50 vol.-% and most preferably at least 70 vol.-%, for example 90 to 95 vol.-% based on the total volume of the space, with the inorganic powder material in non-taped form.

The advantageous effects of the present invention are achieved by using an inorganic powder material which forms the one or more noise and/or sound-reducing layer(s). That is to say, the specific inorganic powder material as set out for the present invention is decisive for achieving the very good acoustic properties.

It is especially required that the inorganic powder material has

i) a bulk density in the range from 0.4 to 2.0 kg/L, and
ii) a weight particle size $d_{90}$ of < 2 000 $\mu$m, and
iii) a weight median particle size $d_{50}$ in the range from 0.2 to 1 500 $\mu$m, and
iv) a weight particle size $d_{10}$ in the range from 0.1 to 200 $\mu$m, and
v) a steepness factor $[(d_{10}/d_{90})*100]$ in the range from 2 to 50 and
vi) a moisture content of $\leq$ 15.0 wt.-%, based on the total weight of the inorganic powder material

The inorganic material is in powder form. The term "powder" in the meaning of the present invention refers to a material that is a bulk solid composed of a large number of fine particles that may flow freely when shaken or tilted, i.e. is a non-taped bulk solid.

In particular, the inorganic powder material is characterized by a bulk density in the range from 0.4 to 2.0 kg/L preferably from 0.6 to 1.8 kg/L.

Additionally, the very good acoustic properties of the noise and/or sound-reducing multilayer unit is especially associated with an inorganic powder material that is characterized by a specific particle size distribution. In particular, it is required that the inorganic powder material has a weight particle size $d_{90}$ of < 2 000 $\mu$m. Preferably, the inorganic powder material has a weight particle size $d_{90}$ of < 1 500 $\mu$m, more preferably in the range from 4 to 1 500 $\mu$m, and most preferably in the range from 10 to 1 000 $\mu$m.

Furthermore, the inorganic powder material has a weight median particle size $d_{50}$ in the range from 0.2 $\mu$m to 1 500 $\mu$m. Preferably, the inorganic powder material has a weight median particle size $d_{50}$ in the range from 0.2 $\mu$m to 1 200 $\mu$m, more preferably in the range from 0.2 $\mu$m to 900 $\mu$m, even more preferably in the range from 0.2 to 750 $\mu$m, and most preferably in the range from 0.2 to 500 $\mu$m.

Furthermore, the inorganic powder material must have a weight particle size $d_{10}$ in the range from 0.1 to 200 $\mu$m. Preferably, the inorganic powder material has a weight particle size $d_{10}$ in the range from 0.1 to 175 $\mu$m, preferably in the range from 0.1 to 150 $\mu$m.

Thus, the inorganic powder material has

i) a weight particle size $d_{90}$ of < 2 000 $\mu$m, preferably, of < 1 500 $\mu$m, more preferably in the range from 4 to 1 500 $\mu$m, and most preferably in the range from 10 to 1 000 $\mu$m, and
ii) a weight median particle size $d_{50}$ in the range from 0.2 to 1 500 $\mu$m, preferably in the range from 0.2 $\mu$m to 1 200 $\mu$m, more preferably in the range from 0.2 to 900 $\mu$m, even more preferably in the range from 0.2 to 750 $\mu$m, and most preferably in the range from 0.2 to 500 $\mu$m, and
iii) a weight particle size $d_{10}$ in the range from 0.1 to 200 $\mu$m, preferably in the range from 0.1 to 175 $\mu$m, preferably

in the range from 0.1 to 150 $\mu$m.

Additionally, it is required that the inorganic powder material has a very specific ratio of coarse to fine particles, which is specified by the steepness factor.

In particular, the inorganic powder material has a steepness factor $[(d_{10}/d_{90})*100]$ in the range from 2 to 50. Preferably, the inorganic powder material has a steepness factor $[(d_{10}/d_{90})*100]$ in the range from 2.5 to 30 and most preferably in the range from 3 to 25.

It is appreciated that the inorganic powder material has a specific ratio of steepness factor to bulk density.

More precisely, it is preferred that the inorganic powder material has a ratio of steepness factor to bulk density, expressed by a quotient obtained by dividing the steepness factor $[(d_{10}/d_{90})*100]$ to bulk density [steepness factor/bulk density (kg/L)], of ≤ 30. Preferably, the inorganic powder material has a ratio of steepness factor to bulk density, expressed by a quotient obtained by dividing the steepness factor $[(d_{10}/d_{90})*100]$ to bulk density [steepness factor/bulk density (kg/L)], in the range from 0.5 to 25, more preferably in the range from 0.8 to 20 and most preferably in the range from 1 to 15.

Additionally, it is appreciated that the inorganic powder material has a moisture content of ≤ 15.0 wt.-%, based on the total weight of the inorganic powder material. Preferably, the inorganic powder material has a moisture content in the range from 0.1 to 12.0 wt.-%, more preferably from 0.1 to 10.0 wt.-% and most preferably from 0.1 to 8.0 wt.-%, based on the total weight of the inorganic powder material.

The one or more noise and/or sound-reducing layer(s) may comprise any inorganic powder material that has the defined characteristics known in the art.

For example, the inorganic powder material comprises, preferably consists of, one or more inorganic powder material(s), i.e. a mixture of different kinds of the inorganic powder materials.

In one embodiment of the present invention, the inorganic powder material comprises, preferably consists of, one inorganic powder material. Alternatively, the inorganic powder material comprises, preferably consists of, two or more inorganic powder materials. For example, the inorganic powder material comprises, preferably consists of, two or three inorganic powder materials. Preferably, the inorganic powder material comprises, preferably consists of, one inorganic powder material.

For example, the inorganic powder material is selected from the group comprising baryt, such as natural baryt or synthetic baryt, talc, mica, clay, kaolin, titanium dioxide, bentonite, magnesite, satin white, silicates, calcium carbonate-comprising materials, such as natural calcium carbonate, synthetic calcium carbonate, surface modified calcium carbonate and materials comprising calcium carbonate such as dolomite or mixed carbonate based materials of such as mixture, and mixtures thereof.

In one embodiment of the present invention, the inorganic powder material is selected from the group comprising baryt, such as natural baryt or synthetic baryt, talc, mica, clay, bentonite, silicates, calcium carbonate-comprising materials.

"Calcium carbonate-comprising materials" refers to a material that comprises calcium carbonate and, eventually may comprise further minerals, such as sulfates, silicates such as talc and/or kaolin clay, quartz and/or mica, carbonates such as magnesium carbonate, dolomite and/or gypsum, and mixtures thereof.

According to one embodiment of the present invention, the amount of calcium carbonate in the calcium carbonate-comprising material is between 60 and 100 wt.-%, preferably between 70 and 99.95 wt.-%, and most preferably between 95 and 99.5 wt.-%, based on the total dry weight of the calcium carbonate-comprising material.

In view of this, the calcium carbonate-comprising material is preferably selected from a natural calcium carbonate, a material comprising calcium carbonate and mixtures thereof.

"Natural calcium carbonate" in the meaning of the present invention is a calcium carbonate obtained from natural sources, such as limestone, marble and/ chalk, and processed through a treatment such as grinding, screening and/or fractionizing by wet and/or dry, for example by a cyclone or classifier.

A preferred material comprising calcium carbonate is dolomite. It is to be noted that dolomite is also a natural calcium carbonate.

Preferably, the inorganic powder material is selected from the group comprising marble, limestone, chalk and mixtures thereof.

In one embodiment, the inorganic powder material comprises a hydrophilic and/or hydrophobic treatment layer on the surface of the inorganic powder material.

For example, the inorganic powder material comprises a hydrophilic and hydrophobic treatment layer on the surface of the inorganic powder material. Alternatively, the inorganic powder material comprises a hydrophilic or hydrophobic treatment layer on the surface of the inorganic powder material. Preferably, the inorganic powder material comprises a hydrophilic treatment layer on the surface of the inorganic powder material.

If the inorganic powder material comprises a hydrophilic and/or hydrophobic treatment layer on the surface of the inorganic powder material, the inorganic powder material has been surface treated with a hydrophilic and/or hydrophobic treatment agent such that on at least a part of the accessible surface area of the inorganic powder material a treatment layer is formed.

If the inorganic powder material comprises a hydrophobic treatment layer on the surface of the inorganic powder material, the inorganic powder material has been surface treated with a hydrophobic treatment agent selected from an aliphatic carboxylic acid having a total amount of carbon atoms from C4 to C24, polysiloxanes and mixtures thereof.

The aliphatic carboxylic acid in the meaning of the present invention can be selected from one or more straight chain, branched chain, saturated, unsaturated and/or alicyclic carboxylic acids. Preferably, the aliphatic carboxylic acid is a monocarboxylic acid, i.e. the aliphatic linear or branched carboxylic acid is characterized in that a single carboxyl group is present. Said carboxyl group is placed at the end of the carbon skeleton.

In one embodiment of the present invention, the aliphatic carboxylic acid is selected from saturated unbranched carboxylic acids, that is to say the aliphatic carboxylic acid is preferably selected from the group consisting of butanoic acid, pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosanoic acid, behenic acid, tricosanoic acid, lignoceric acid and mixtures thereof.

In another embodiment of the present invention, the aliphatic carboxylic acid is selected from the group consisting of octanoic acid, decanoic acid, lauric acid, myristic acid, palmitic acid, stearic acid, arachidic acid and mixtures thereof. Preferably, the aliphatic carboxylic acid is selected from the group consisting of myristic acid, palmitic acid, stearic acid and mixtures thereof.

For example, the aliphatic carboxylic acid is stearic acid.

Suitable polysiloxanes are polydialkylsiloxanes as e.g. described in US 2004/0097616 A1. Preferred are polydialkylsiloxanes selected from the group consisting of polydimethylsiloxane, dimethicone, polydiethylsiloxane, polymethylphenylsiloxane and mixtures thereof. Most preferably, the polydialkylsiloxane is polydimethylsiloxane.

Additionally or alternatively, the inorganic powder material comprises a hydrophilic treatment layer on the surface of the inorganic powder material. In this case, the inorganic powder material has been surface treated with a hydrophilic treatment agent preferably selected from polyols.

Preferred polyols are diols or triols. Most preferably, the polyol is glycerol or monopropylene glycol.

If the inorganic powder material comprises a hydrophilic and hydrophobic treatment layer on the surface of the inorganic powder material, the inorganic powder material has been surface treated simultaneously or separately in any order with the hydrophilic and hydrophobic treatment agents.

In one embodiment, the inorganic powder material comprises a hydrophilic treatment layer on the surface of the inorganic powder material.

It is to be noted that the noise and/or sound-reducing layer can be of any thickness that is typically used for the products to be prepared. For example, the noise and/or sound-reducing layer formed by the inorganic powder material has an average layer thickness in the range from 0.2 to 100 cm. Preferably, the noise and/or sound-reducing layer formed by the inorganic powder material has an average layer thickness in the range from 1 cm to 80 cm, more preferably in the range from 10 to 60 cm and most preferably in the range from 10 to 40 cm. For example, the noise and/or sound-reducing layer formed by the inorganic powder material has an average layer thickness in the range from 13 cm to 40 cm.

If the noise and/or sound-reducing multilayer unit comprises two or more noise and/or sound-reducing layers, it is appreciated that the average thickness of the layers may be the same or different. In particular, for production and cost it is preferred that the two or more noise and/or sound-reducing layers have the same average thickness.

It is one requirement of the present invention that the one or more inorganic powder material forming noise and/or sound-reducing layer(s) has/have in sum an average thickness of 0.1 cm to 100 cm, preferably from 1 cm to 80 cm, more preferably from 10 to 60 cm and most preferably from 10 to 40 cm. For example, the one or more inorganic powder material forming noise and/or sound-reducing layer(s) has/have in sum an average thickness in the range from 13 cm to 40 cm.

It is to be noted that the dimensions of the noise and/or sound-reducing multilayer unit are not limited to a specific size. However, by way of a none limiting dimensional example, the height (y-direction) of the noise and/or sound-reducing multilayer unit can be between 0.5 and 10 m, preferably from 1 to 8 m and most preferably from 2 to 5 m. Additionally or alternatively, the depth (z-direction) of the noise and/or sound-reducing multilayer unit can be between 0.5 and 10 m. Additionally or alternatively, the length (x-direction) of the noise and/or sound-reducing multilayer unit can be from 0.5 m to several km, e.g. from 0.5 m to 20 km.

Method for the preparation of a noise and/or sound-reducing multilayer unit and uses

The present invention also refers to a method for the preparation of a noise and/or sound-reducing multilayer unit, said method comprises the steps of

a) providing at least one solid back layer and at least one solid front layer as defined herein,
b) providing a inorganic powder material as defined herein,

c) arranging the back and front layers of step a) such that a space is formed between the back and front layers, and
d) filling the inorganic powder material of step b) at least partially into the space formed between the back and front layers such as to form a noise and/or sound-reducing multilayer unit.

With regard to the definition of the noise and/or sound-reducing multilayer unit, the at least one solid back layer and at least one solid front layer, the inorganic powder material and preferred embodiments thereof, reference is made to the statements provided above when discussing the technical details of the noise and/or sound-reducing multilayer unit of the present invention.

According to step c) of the method of the present invention, the back and front layers of step a) are arranged such that a space is formed between the back and front layers. It is appreciated that the back and front layers of step a) can be arranged in any known manner that is suitable to achieve the final noise and/or sound-reducing multilayer unit.

According to step d) of the method of the present invention, the inorganic powder material of step b) at least partially filled into the space formed between the back and front layers such as to form the noise and/or sound-reducing multilayer unit. It is appreciated that the filling of the space formed between the back and front layers can be carried out in any known manner to achieve the final noise and/or sound-reducing multilayer unit.

At the end of the step d), that is to say after having filled the respective space formed between the back and front layers of the unit, the inorganic powder material of step b) may beneficially be compacted. In order to do so, an immersion vibrator or a rammer can be applied to the inorganic powder material of step b), via the upper opening of the unit. If necessary, at the end of that compaction, additional inorganic powder material of step b) is poured into the unit.

In one embodiment, the noise and/or sound-reducing multilayer unit further comprises one or more intermediate layer(s).

With regard to the definition of the one or more intermediate layer(s) and preferred embodiments thereof, reference is made to the statements provided above when discussing the technical details of the noise and/or sound-reducing multilayer unit of the present invention.

Thus, the method of the present invention preferably comprises a step c1) of arranging one or more intermediate layer(s) such that they are positioned between the at least one solid front layer and the at least one solid back layer. It is appreciated that the one or more intermediate layer(s) can be positioned between the back and front layers in any known manner that is suitable to achieve the final noise and/or sound-reducing multilayer unit.

In view of this, it is preferred that method step c1) is carried out after method step c). Additionally or alternatively, method step c1) is carried out before method step d). Preferably, method step c1) is carried out after step c) and before step d).

In one embodiment, the method of the present invention thus comprises the steps of

a) providing at least one solid back layer and at least one solid front layer as defined herein,
b) providing an inorganic powder material as defined herein,
c) arranging the back and front layers of step a) such that a space is formed between the back and front layers,
c1) arranging one or more intermediate layer(s) such that they are positioned between the at least one solid front layer and the at least one solid back layer, and
d) filling the inorganic powder material of step b) at least partially into the space formed between the back and front layers and the one or more intermediate layer(s) such as to form the noise and/or sound-reducing multilayer unit.

In one embodiment, the noise and/or sound-reducing multilayer unit further comprises one or more side layer(s).

With regard to the definition of the one or more side layer(s) and preferred embodiments thereof, reference is made to the statements provided above when discussing the technical details of the noise and/or sound-reducing multilayer unit of the present invention.

Thus, the method of the present invention preferably further comprises a step c2) of arranging one or more side layer(s) such that they are positioned at one or more open sides of the noise and/or sound-reducing multilayer unit. It is appreciated that the one or more side layer(s) can be positioned at one or more open sides of the noise and/or sound-reducing multilayer unit in any known manner that is suitable to achieve the final noise and/or sound-reducing multilayer unit.

In view of this, it is preferred that method step c2) is carried out after method step c). Additionally or alternatively, method step c2) is carried out before method step d). Preferably, method step c2) is carried out after step c) and before step d).

In one embodiment, the method of the present invention thus comprises the steps of

a) providing at least one solid back layer and at least one solid front layer as defined herein,
b) providing an inorganic powder material as defined herein,
c) arranging the back and front layers of step a) such that a space is formed between the back and front layers,

c2) arranging one or more side layer(s) such that they are positioned at one or more open sides of the noise and/or sound-reducing multilayer unit, and

d) filling the inorganic powder material of step b) at least partially into the space formed between the back and front layers and the one or more side layer(s) such as to form the noise and/or sound-reducing multilayer unit.

In one embodiment, the noise and/or sound-reducing multilayer unit further comprises a top layer.

With regard to the definition of the top layer and preferred embodiments thereof, reference is made to the statements provided above when discussing the technical details of the noise and/or sound-reducing multilayer unit of the present invention.

Thus, the method of the present invention preferably further comprises a step c3) of arranging a top layer such that it is positioned on top of the noise and/or sound-reducing multilayer unit. The top layer is preferably made weathertight, by any appropriate means. It is appreciated that the top layer can be positioned on top of the noise and/or sound-reducing multilayer in any known manner that is suitable to achieve the final noise and/or sound-reducing multilayer unit.

In view of this, it is preferred that method step c3) is carried out after method step d).

In one embodiment, the method of the present invention thus comprises the steps of

a) providing at least one solid back layer and at least one solid front layer as defined herein,

b) providing an inorganic powder material as defined herein,

c) arranging the back and front layers of step a) such that a space is formed between the back and front layers,

d) filling the inorganic powder material of step b) at least partially into the space formed between the back and front layers and the one or more side layer(s) such as to form the noise and/or sound-reducing multilayer unit, and

c3) arranging a top layer such that it is positioned on top of the noise and/or sound-reducing multilayer unit.

In one embodiment, the noise and/or sound-reducing multilayer unit further comprises a bottom layer.

With regard to the definition of the bottom layer and preferred embodiments thereof, reference is made to the statements provided above when discussing the technical details of the noise and/or sound-reducing multilayer unit of the present invention.

Thus, the method of the present invention preferably comprises a step c4) of arranging a bottom layer such that it is positioned at the bottom of the noise and/or sound-reducing multilayer unit. It is appreciated that the bottom layer can be positioned at the bottom of the noise and/or sound-reducing multilayer in any known manner that is suitable to achieve the final noise and/or sound-reducing multilayer unit.

In view of this, it is preferred that method step c4) is carried out before method step c).

In one embodiment, the method of the present invention thus comprises the steps of

a) providing at least one solid back layer and at least one solid front layer as defined herein,

b) providing an inorganic powder material as defined herein,

c4) arranging a bottom layer such that it is positioned at the bottom of the noise and/or sound-reducing multilayer unit,

c) arranging the back and front layers of step a) on the bottom layer such that a space is formed between the back and front layers, and

d) filling the inorganic powder material of step b) at least partially into the space formed between the back and front layers and the one or more side layer(s) such as to form the noise and/or sound-reducing multilayer unit.

It is preferred that the noise and/or sound-reducing multilayer unit comprises a bottom layer and a top layer. In this embodiment, the method of the present invention thus comprises the steps of

a) providing at least one solid back layer and at least one solid front layer as defined herein,

b) providing an inorganic powder material as defined herein,

c4) arranging a bottom layer such that it is positioned at the bottom of the noise and/or sound-reducing multilayer unit,

c) arranging the back and front layers of step a) on the bottom layer such that a space is formed between the back and front layers,

d) filling the inorganic powder material of step b) at least partially into the space formed between the back and front layers and the one or more side layer(s) such as to form the noise and/or sound-reducing multilayer unit, and

c3) arranging a top layer such that it is positioned on top of the noise and/or sound-reducing multilayer unit.

Even more preferably, the noise and/or sound-reducing multilayer unit comprises a bottom layer and a top layer and one or more intermediate layers. In this embodiment, the method of the present invention thus comprises the steps of

a) providing at least one solid back layer and at least one solid front layer as defined herein,

b) providing an inorganic powder material as defined herein,

c4) arranging, preferably before step c), a bottom layer such that it is positioned at the bottom of the noise and/or sound-reducing multilayer unit,

c) arranging the back and front layers of step a) on the bottom layer such that a space is formed between the back and front layers,

c1) arranging, preferably after step c) and before step d), one or more intermediate layer(s) such that they are positioned between the at least one solid front layer and the at least one solid back layer,

d) filling the inorganic powder material of step b) at least partially into the space formed between the back and front layers and the one or more side layer(s) such as to form the noise and/or sound-reducing multilayer unit, and

c3) arranging, preferably after step d), a top layer such that it is positioned on top of the noise and/or sound-reducing multilayer unit.

In one embodiment, the noise and/or sound-reducing multilayer unit comprises a bottom layer and a top layer and one or more intermediate layer(s) and one or more side layer(s). In this embodiment, the method of the present invention thus comprises the steps of

a) providing at least one solid back layer and at least one solid front layer as defined herein,

b) providing an inorganic powder material as defined herein,

c4) arranging, preferably before step c), a bottom layer such that it is positioned at the bottom of the noise and/or sound-reducing multilayer unit,

c) arranging the back and front layers of step a) on the bottom layer such that a space is formed between the back and front layers,

c1) arranging, preferably after step c) and before step d), one or more intermediate layer(s) such that they are positioned between the at least one solid front layer and the at least one solid back layer,

c2) arranging, preferably after step c) and/or step c1) and before step d), one or more side layer(s) such that they are positioned at one or more open sides of the noise and/or sound-reducing multilayer unit, and

d) filling the inorganic powder material of step b) at least partially into the space formed between the back and front layers and the one or more side layer(s) such as to form the noise and/or sound-reducing multilayer unit, and

c3) arranging, preferably after step d), a top layer such that it is positioned on top of the noise and/or sound-reducing multilayer unit.

A further aspect of the present invention refers to a noise and/or sound-protection wall comprising one or more noise and/or sound-reducing multilayer unit(s) as defined herein.

Accordingly, the noise and/or sound-protection wall comprising one or more noise and/or sound-reducing multilayer unit(s) for reducing noise having a wavelength from 50 to 15 000 Hz, preferably from 100 to 10 000 Hz, and most preferably from 100 to 7 000 Hz, the noise and/or sound-reducing multilayer unit(s) comprise at least one solid back layer and at least one solid front layer which are arranged such that one or more space(s) is/are formed between the solid back and front layers, and the one or more space(s) is/are at least partially filled with an inorganic powder material forming one or more noise and/or sound-reducing layer(s), wherein the one or more inorganic powder material forming noise and/or sound-reducing layer(s) has/have in sum an average thickness of 0.1 cm to 100 cm, wherein

a) the at least one solid back layer and the at least one solid front layer are configured such that they are suitable for holding the one or more noise and/or sound-reducing layer(s) in position, and

b) the inorganic powder material has

i) a bulk density in the range from 0.4 to 2.0 kg/L, and

ii) a weight particle size $d_{90}$ of < 2 000 $\mu$m, and

iii) a weight median particle size $d_{50}$ in the range from 0.2 to 1 500 $\mu$m, and

iv) a weight particle size $d_{10}$ in the range from 0.1 to 200 $\mu$m, and

v) a steepness factor $[(d_{10}/d_{90})*100]$ in the range from 2 to 50 and a moisture content of $\leq$ 15.0 wt.-%, based on the total weight of the inorganic powder material.

With regard to the definition of the noise and/or sound-reducing multilayer unit and preferred embodiments thereof, reference is made to the statements provided above when discussing the technical details of the noise and/or sound-reducing multilayer unit of the present invention.

It is to be noted that the noise and/or sound-reducing multilayer units can be arranged in any known manner in order to build-up the noise and/or sound-protection wall. That is to say, each noise and/or sound-reducing multilayer unit can be fixed to an adjacent noise and/or sound-reducing multilayer unit by using any suitable means, such as with clips or wire ties.

The dimensions of the noise and/or sound-protection wall are not limited to a specific size. However, by way of a none limiting dimensional example, the height (y-direction) of the noise and/or sound-protection wall can be between 0.5 and 10 m, preferably from 1 to 8 m and most preferably from 2 to 5 m. Additionally or alternatively, the depth (z-direction) of the noise and/or sound-protection wall can be between 0.5 and 10 m. Additionally or alternatively, the length (x-direction) of the noise and/or sound-protection wall can be from 0.5 m to several km, e.g. from 0.5 m to 100 km.

In view of the very good acoustic properties achieved, the present invention refers in a further aspect to the use of the inorganic powder material as defined herein as noise and/or sound-reducing material. It is preferred that the noise and/or sound-reducing material is suitable for reducing noise having a wavelength from 50 to 15 000 Hz, preferably 1 000 to 10 000 Hz, and most preferably from 100 to 7 000 Hz.

More precisely, it is appreciated that the inorganic powder material has

    i) a bulk density in the range from 0.4 to 2.0 kg/L, and
    ii) a weight particle size $d_{90}$ of < 2 000 $\mu$m, and
    iii) a weight median particle size $d_{50}$ in the range from 0.2 to 1 500 $\mu$m, and
    iv) a weight particle size $d_{10}$ in the range from 0.1 to 200 $\mu$m, and
    v) a steepness factor $[(d_{10}/d_{90})*100]$ in the range from 2 to 50, and
    vi) a moisture content of $\leq$ 15.0 wt.-%, based on the total weight of the inorganic powder material.

With regard to the definition of the inorganic powder material and preferred embodiments thereof, reference is made to the statements provided above when discussing the technical details of the noise and/or sound-reducing multilayer unit of the present invention.

According to a further aspect, the use of the inorganic powder material as defined herein for the preparation of a noise and/or sound-protection wall is provided.

More precisely, it is appreciated that the inorganic powder material has

    i) a bulk density in the range from 0.4 to 2.0 kg/L, and
    ii) a weight particle size $d_{90}$ of < 2 000 $\mu$m, and
    iii) a weight median particle size $d_{50}$ in the range from 0.2 to 1 500 $\mu$m, and
    iv) a weight particle size $d_{10}$ in the range from 0.1 to 200 $\mu$m, and
    v) a steepness factor $[(d_{10}/d_{90})*100]$ in the range from 2 to 50, and
    vi) a moisture content of $\leq$ 15.0 wt.-%, based on the total weight of the inorganic powder material.

With regard to the definition of the inorganic powder material and preferred embodiments thereof, reference is made to the statements provided above when discussing the technical details of the noise and/or sound-reducing multilayer unit of the present invention.

### Brief description of the Figures

Fig. 1 is a schematic sectional front view of the mounting/installation used to conduct the experiments, which is a polystyrene box having a wall thickness of 5 cm.

Fig. 2 is a linear extrapolation curve for Polystyrene block as insulator material

Fig. 3 is a linear extrapolation curve for American calcined clay as insulator material

Fig. 4 is a linear extrapolation curve for Sodium activated Bentonite as insulator material

The following examples are meant to illustrate the invention without restricting its scope.

### Examples

### Measurement Methods

The following measurement methods are used to evaluate the parameters given in the description, examples and claims.

**The moisture content**

The moisture content is measured in accordance with ISO Norm 11465 moisture content of soil at 105°C to constant weight.

**Specific surface area (SSA)**

Throughout the present document, the specific surface area (in $m^2/g$) of the inorganic powder material is determined using the BET method (using nitrogen as adsorbing gas), which is well known to the skilled man (ISO 9277:2010). The total surface area (in $m^2$) of the material is then obtained by multiplication of the specific surface area and the mass (in g) of the material prior to treatment.

**Particle size distribution (mass % particles with a diameter < X) and weight median diameter ($d_{50}$) of the particulate material.**

The particle size distribution was measured using a Malvern Mastersizer 3000 (Malvern Instruments Ltd. Enigma Business Park, Grovewood Road, Malvern, Worcestershire, UK WR14 1XZ) in combination with Malvern Aero S dry dispersion unit and dry cell was used to determine the particle size distribution of the solid inorganic powder material within the fineness range of dso of from 500 to 0.1 $\mu$m by means of laser diffraction. The methods used are described in the Mastersizer 3000 Basic Guide, Mastersizer 3000 Manual and the Manual for Aero Series Dry dispersion unit available by Malvern Instruments Ltd. Approximately 10 ml of sample was loaded into the Aero S through the corresponding sieve. The results are expressed in V.-% (volume %).

The German Norm DIN 66165 sieve analysis were used to determine the particle size distribution of the solid inorganic powder material within the fineness range of $d_{50}$ of from 2 000 to 45 $\mu$m. The sieve analysis is a procedure used to assess the particle size distribution of a granular material. A sieve analysis can be performed on any type of granular materials including sands, crushed rock, clays, granite, feldspars, coal, a wide range of manufactured powders, grain and seeds. The results are expressed in V.-% (volume %).

**Bulk Density**

The bulk density of the solid inorganic powder material within the fineness range of $d_{50}$ of < 45 $\mu$m was determined in compliance with ISO 60 and following the International standard DIN/ISO 697.

The bulk density of the solid inorganic powder materials within the fineness range of $d_{50}$ of from 2 000 to 45 $\mu$m was determined using a 25 litre bucket.

**Swelling volume**

The swelling volume of activated bentonite was determined by placing 100 ml of distilled water into a 100 ml graduated (1 ml steps) glass cylinder at 23°C. 2 gram of bentonite were added slowly during 10 minutes on the top of the water to let it sink slowly to the bottom of the cylinder. After further 10 minutes the volume of the bentonite on the bottom of the cylinder was measured. The result is reported in ml/2g ($\pm$ 1 ml).

**Equipment**

**Sound Generator:**

DELL PC Model E6420 / external Logitech Z 200, 5W RSM speakers, using NCH Tongenerator v 3.05 Software by NCH Software, (www.nch.com.au/tonegen.de)

**Sound Level Meter: Samsung Galaxy S6**

using Sound pressure level meter (v 1.6.7) manual by Smart Tools Co http://androidboy1.blogspot.ch/2015/08/sound-meter-v16.html?m=1

**The installation**

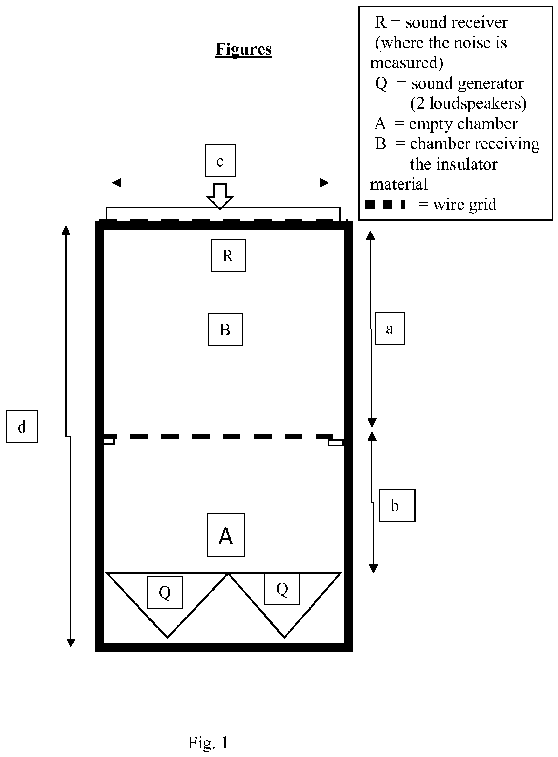

The installation set up to conduct the experiments is a polystyrene cuboid box (PC) is shown in Fig. 1, with a width (c) of c = 25 cm, a depth (c) of c = 25 cm, height (d) of d = 60 cm, a height (a) of a = 30 cm and a height (b) of b = 20 cm. The polystyrene cuboid box comprises a bottom and side, front walls having a thickness of 5 cm. The top wall is composed of a wire grid. Another wire grid is placed in the middle height of the polystyrene cuboid box (PC), thus creating 2 chambers; an empty chamber (A) dedicated to receiving the Sound Generator (Q) and another chamber (B) dedicated to receiving the insulating material (i.e. the inorganic powder material) to be tested; i.e. the dry inorganic powder material or polystyrene.

### Definitions

$$\text{Steepness factor } f_s = (d_{10}/d_{90}) *100$$

$I_0$ = basic noise measured in the room
$I_1$ = emmited (sent out) noise by the Sound Generator
$I_2$ = immited (received) noise measured behind the absorbent
**f** = sound reduction factor
**F** = Frequency at which the experiments have been conducted
**h** = height of the insulator material (i.e. the inorganic powder material) used.
$h_{ex}$ = height at f = 0 (theoretical height of the insulator material necessary to extinguished). Value obtained after the linear extrapolation curve has been generated.
**Bulk** = bulk density in kg/L of the insulator material.
**Insulator material** = inorganic powder material

### Experimental protocol

Using the installation as shown in Fig. 1, a series of experiments were conducted using various insulating material.
Typically for each experiment, the following steps were conducted:

1) Measure of the basic noise measured in the room **(Io)**
2) Measure of the noise emitted (sent out) by the sound generator at a specific frequency **F** at the location **M** when chamber **B** is empty; i.e. when **h** = 0 cm.
3) Fill the chamber **B** with the chosen insulator material **I** until it reaches a height **h.**
4) When applicable, measure the steepness factor of the insulator material **I** using the following $f_s = (d_{10}/d_{90}) *100$
5) Measure of the noise immitted (received) at the location **M** when chamber **B** is filled with the insulator material to be tested; i.e. the dry inorganic powder material or polystyrene.
6) Calculation of the sound reduction factor **f** using the following formula; f = I2-I0/I1-I0
7) Repeat the sequence of steps 1), 2), 3) and 4) with a different height **h** of the same insulating material.
8) Make a linear extrapolation curve using the measurements above.
9) Extrapole the height of the insulator material required to completely extinguish the noise $h_{ex}$ (when f = 0 Hz)
10) Extrapole the density of the insulator material required to completely extinguish the noise $d_{ex}$ (when f = 0 Hz) using the following formula:
11) Conduct another series of experiments following the steps above with a different frequency.

### Example 1 (comparative):

1) Insulator material tested: polystyrene block Bulk density: 0.019 kg/L
2) Frequency used to conduct the series of experiments: 1 000 Hz

**Table 1:** results of the noise measurements using the polystyrene block as insulator material

| Frequency (Hz) | Bulk (kg/L) | amount of product by volume (L/m$^2$) | I0 (DB) | h (cm) | I1 (DB) | I2 (DB) | f (-) |
|---|---|---|---|---|---|---|---|
| 1 000 | | | 36 | 0 | 100 | 1 000 | 1 |

(continued)

| Frequency (Hz) | Bulk (kg/L) | amount of product by volume (L/m$^2$) | I0 (DB) | h (cm) | I1 (DB) | I2 (DB) | f (-) |
|---|---|---|---|---|---|---|---|
| | 0.019 | 1.8 | 36 | 3 | 100 | 88 | 0.81 |
| | 0.019 | 3.0 | 36 | 5 | 100 | 85 | 0.77 |
| | 0.019 | 3.6 | 36 | 6 | 100 | 83 | 0.73 |

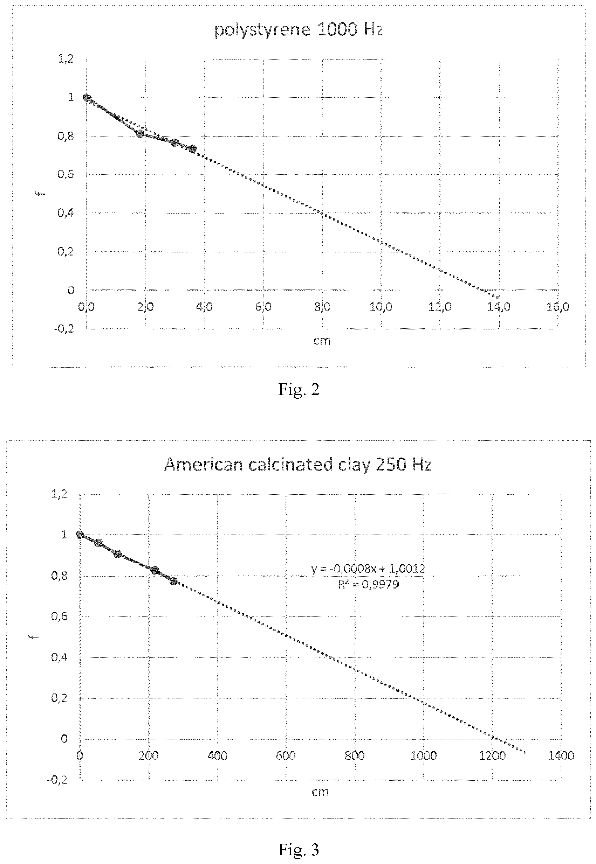

The linear extrapolation curve for the polystyrene block as insulator material is shown in Fig. 2.

The height of polystyrene block required necessary to extinguish completely the noise generated at 1 000 Hz is $h_{ex}$ = 13.05 cm (at f = 0) and a density of d = 13.5 L/m$^2$ (at f = 0). Thus, polystyrene is a good candidate as insulator material for sound and/or noise reducing. Despite the fact that it gives a good sound insulation it is however very flammable. When burning, it produces black smoke and toxic styrene oligomers / monomers smoke.

**Example 2 (comparative):**

1) Insulator material tested: American calcined clay, characteristics of the American calcined clay used:

Moisture content: 0.23 wt.-%
Bulk density: 0.275 kg/L

- $d_{98}$ = 15.7 $\mu$m
- $d_{90}$ = 10.6 $\mu$m
- $d_{50}$ = 3.78 $\mu$m
- $d_{10}$ = 1.02 $\mu$m
- steepness factor = 9.4
- $d_{50}$ particle volume = 0.00000945 mL

2) Frequency used to conduct the series of experiments: 250 Hz

**Table 2:** Results of the noise measurements using the American calcined clay as insulator material

| Frequency (Hz) | amount of product by weight (kg/m$^2$) | Bulk (kg/L) | amount of product by volume (L/m$^2$) | I0 (DB) | I1 (DB) | I2 (DB) | f (-) |
|---|---|---|---|---|---|---|---|
| | | | | 0 | 0 | 0 | 1 |
| | 15 | 0.275 | 54.5 | 25 | 100 | 97 | 0.96 |
| 250 | 30 | 0.275 | 109.1 | 25 | 100 | 93 | 0.91 |
| | 60 | 0.275 | 218.2 | 25 | 100 | 87 | 0.83 |
| | 75 | 0.275 | 272.7 | 25 | 100 | 83 | 0.77 |

The linear extrapolation curve for American calcined clay as insulator material is shown in Fig. 3.

The height of American calcined clay required necessary to extinguish completely the noise generated at 250 Hz is $h_{ex}$ = 1.21 m (at f = 0) and a density of d = 1 210 L/m$^2$ (at f = 0). Thus, an inorganic powder material with the described bulk density in combination with such a particle size distribution and is not a good candidate as insulator material for sound and/or noise reducing.

**Example 3 (comparative):**

1) Insulator material tested: limestone (Swiss Jura), characteristics of the limestone (Swiss Jura) used:

Moisture content: ~ 0.1 wt.-%

- $d_{90}$ = 20 mm

- $d_{50}$ = 15 mm

- $d_{10}$ = 10 mm

- steepness factor = ~ 50

- $d_{50}$ particle volume = ~ 0.375 mL

2) Frequency used to conduct the series of experiments: 1 000 Hz

**Table** 3: Results of the noise measurements using the limestone (Swiss Jura) as insulator material

| Frequency (Hz) | amount of product by weight (kg/m²) | Bulk (kg/L) | amount of product by volume (L/m²) | I0 (DB) | I1 (DB) | I2 (DB) | f (-) |
|---|---|---|---|---|---|---|---|
| 1 000 | | | | 0 | 0 | 0 | 1 |
| | 200 | 1.4 | 142.9 | 45 | 90 | 80 | 0.78 |

The height of limestone required necessary to extinguish completely the noise generated at 1 000 Hz is $h_{ex}$ = 65 cm (at f = 0) and a density of d = 650 L/m² (at f = 0). Thus, an inorganic powder material with the described coarse particle size distribution is not a good candidate as insulator material for sound and/or noise reducing.

**Example 4 (comparative):**

1) Insulator material tested: Black forest granite (Germany), characteristics of the Black forest granite used:

Moisture content: ~ 0.2 wt.-%

- $d_{90}$ = 70 mm
- $d_{50}$ = 45 mm
- $d_{10}$ = 30 mm
- steepness factor = ~ 43
- $d_{50}$ particle volume = ~ 1.125 mL

2) Frequency used to conduct the series of experiments: 1 000 Hz

**Table** 4: Results of the noise measurements using the Black forest granite (Germany) as insulator material

| Frequency (Hz) | amount of product by weight (kg/m²) | Bulk (kg/L) | amount of product by volume (L/m²) | I0 (DB) | I1 (DB) | I2 (DB) | f (-) |
|---|---|---|---|---|---|---|---|
| 1 000 | | | | 0 | 0 | 0 | 1 |
| | 120 | 1.4 | 85.7 | 17 | 100 | 96 | 0.95 |

The height of Black forest granite (Germany) required necessary to extinguish completely the noise generated at 1 000 Hz is $h_{ex}$ = 1.8 m (at f = 0) and a density of d = 1 800 L/m² (at f = 0). Thus, an inorganic powder material with the described very coarse particle size distribution is not a good candidate as insulator material for sound and/or noise reducing.

**Example 5 (invention):**

1) Insulator material tested: marble (Turkey), characteristics of the marble (Turkey) used:

Moisture content: 0.05 wt.-%

- $d_{98}$ = 9.1 $\mu$m
- $d_{90}$ = 5.9 $\mu$m
- $d_{50}$ = 1.9 $\mu$m
- $d_{10}$ = 0.4 $\mu$m
- steepness factor = 6.7
- $d_{50}$ particle volume = 0.00000475 mL
- Bulk density: 0.64 kg/L
- chemical analysis

    $CaCO_3$ 99.7 wt.-%
    HCl insol. ~ 0.2 wt.-%

2) Frequency used to conduct the series of experiments: 500 Hz

**Table 5:** Results of the noise measurements using the marble (Turkey) as insulator material

| Frequency (Hz) | amount of product by weight (kg/m$^2$) | Bulk (kg/L) | amount of product by volume (L/m$^2$) | I0 (DB) | I1 (DB) | I2 (DB) | f (-) |
|---|---|---|---|---|---|---|---|
| | | | | 35 | 100 | 100 | 1 |
| | 20 | 0.64 | 31.3 | 35 | 100 | 90 | 0.85 |
| | 40 | 0.64 | 62.5 | 35 | 100 | 91 | 0.86 |
| 500 | 60 | 0.64 | 93.8 | 35 | 100 | 86 | 0.78 |
| | 80 | 0.64 | 125.0 | 35 | 100 | 78 | 0.66 |
| | 100 | 0.64 | 156.3 | 35 | 100 | 72 | 0.57 |

The height of Turkish marble required necessary to extinguish completely the noise generated at 500 Hz is $h_{ex}$ = 39 cm (at f = 0) and a density of d = 390 L/m$^2$ (at f = 0). Thus, an inorganic powder material with the described particle size distribution, moisture content and bulk density is definitely a good candidate as insulator material for sound and/or noise reducing.

**Example 6 (invention):**

1) Insulator material tested: dolomitic marble / silicate blend (Austria), characteristics of the dolomitic marble / silicate blend (Austria) used:

Moisture content: 0.3 wt.-%

- $d_{98}$ = 62.7 $\mu$m
- $d_{90}$ = 7.5 $\mu$m
- $d_{50}$ = 2.0 $\mu$m
- $d_{10}$ = 0.4 $\mu$m
- steepness factor = 7
- $d_{50}$ particle volume = 0.00005 mL
- Bulk density: 0.88 kg/L

- BET specific surface area: 2.1 $m^2/g$
- chemical analysis

$CaCO_3$ 94.2 wt.-%
$MgCO_3$ 4.1 wt.-%
HCl insol. ~ 1.3 wt.-%, mainly silicates and little quartz 0.1 wt.-% glycerol, which corresponds to about 0.5 $mg/m^2$ on inorganic powder material

2) Frequency used to conduct the series of experiments: 750 Hz and 1 750 Hz.

**Table 6a:** Results of the noise measurements using the dolomitic marble (Austria) as insulator material

| Frequency (Hz) | amount of product by weight (kg/m$^2$) | Bulk (kg/L) | amount of product by volume (L/m$^2$) | I0 (DB) | I1 (DB) | I2 (DB) | f (-) |
|---|---|---|---|---|---|---|---|
| | | | | | | | 1 |
| 750 | 80 | 0.88 | 90.9 | 25 | 90 | 70 | 0.69 |
| | 120 | 0.88 | 136.4 | 25 | 90 | 67 | 0.65 |

The height of the dolomitic marble (Austria) required necessary to extinguish completely the noise generated at 750 Hz is $h_{ex}$ = 37 cm (at f = 0) and a density of d = 370 L/m$^2$ (at f = 0). Thus, an inorganic powder material with the described particle size distribution and bulk density is definitely a good candidate as insulator material for sound and/or noise reducing at a frequency of 750 Hz.

**Table 6b:** Results of the noise measurements using the dolomitic marble (Austria) as insulator material

| Frequency (Hz) | amount of product by weight (kg/m$^2$) | Bulk (kg/L) | amount of product by volume (L/m$^2$) | I0 (DB) | I1 (DB) | I2 (DB) | f (-) |
|---|---|---|---|---|---|---|---|
| | | | | | | | 1 |
| 1 750 | 80 | 0.88 | 90.9 | 25 | 90 | 73 | 0.74 |

The height of dolomitic marble (Austria) required necessary to extinguish completely the noise generated at 1 750 Hz is $h_{ex}$ = 35 cm (at f = 0) and a density of d = 350 L/m$^2$ (at f = 0). Thus, an inorganic powder material with the described particle size distribution, moisture content and bulk density is definitely a good candidate as insulator material for sound and/or noise reducing also at a frequency of 1 750 Hz.

**Example 7 (invention):**

1) Insulator material tested: Carrara marble (Italy), characteristics of the marble (Italy) used:

Moisture content: 0.95 wt.-%

- $d_{98}$ = 3000 $\mu$m
- $d_{90}$ = 1100 $\mu$m
- $d_{80}$ = 920 $\mu$m
- $d_{70}$ = 600 $\mu$m
- $d_{50}$ = 220 $\mu$m
- $d_{30}$ = 90 $\mu$m
- $d_{20}$ = 60 $\mu$m
- $d_{10}$ = 35 $\mu$m
- steepness factor = 3
- $d_{50}$ particle volume = 0.0055 mL
- Bulk density: 1.8 kg/L
- chemical analysis

CaCO$_3$ 99.8 wt.-%
HCl insol. ~ 0.15 wt.-%

2) Frequency used to conduct the series of experiments: 500 Hz.

**Table 7:** Results of the noise measurements using the Carrara marble (Italy) as insulator material

| Frequency (Hz) | amount of product by weight (kg/m$^2$) | Bulk (kg/L) | amount of product by volume (L/m$^2$) | I0 (DB) | I1 (DB) | I2 (DB) | f (-) |
|---|---|---|---|---|---|---|---|
| 500 | | | | | 100 | | 1 |
| | 56 | 1.8 | 31.1 | 40 | 100 | 94 | 0.90 |
| | 112 | 1.8 | 62.2 | 40 | 100 | 90 | 0.83 |
| | 168 | 1.8 | 93.3 | 40 | 100 | 81 | 0.68 |

The height of the marble (Italy) required necessary to extinguish completely the noise generated at 500 Hz is $h_{ex}$ = 31 cm (at f = 0) and a density of d = 310 L/m$^2$ (at f = 0). Thus, an inorganic powder material with the described particle size distribution, moisture content and bulk density is definitely a good candidate as insulator material for sound and/or noise reducing.

**Example 8 (invention):**

1) Insulator material tested: sodium activated bentonite, characteristics of the sodium activated bentonite used:

Moisture content: 12.1 wt.-%

- $d_{98}$ = 165.0 $\mu$m
- $d_{90}$ = 83.2 $\mu$m
- $d_{50}$ = 25.5 $\mu$m
- $d_{10}$ = 6.8 $\mu$m
- steepness factor = 8.2
- $d_{50}$ particle volume = 0.00006375 mL
- bulk density: 0.7 kg/L
- Swelling volume: 35 ml / 2 g

2) Frequency used to conduct the series of experiments: 100 and 1 000 Hz.

**Table 8a:** Results of the noise measurements using sodium activated bentonite as insulator material

| Frequency (Hz) | amount of product by weight (kg/m$^2$) | Bulk (kg/L) | amount of product by volume (L/m$^2$) | I0 (DB) | I1 (DB) | I2 (DB) | f (-) |
|---|---|---|---|---|---|---|---|
| 1 000 | | | | | 80 | | 1 |
| | 30 | 0.7 | 42.9 | 25 | 80 | 60 | 0.64 |
| | 60 | 0.7 | 85.7 | 25 | 80 | 53 | 0.51 |
| | 90 | 0.7 | 128.6 | 25 | 80 | 36 | 0.20 |
| | 120 | 0.7 | 171.4 | 25 | 80 | 28 | 0.05 |

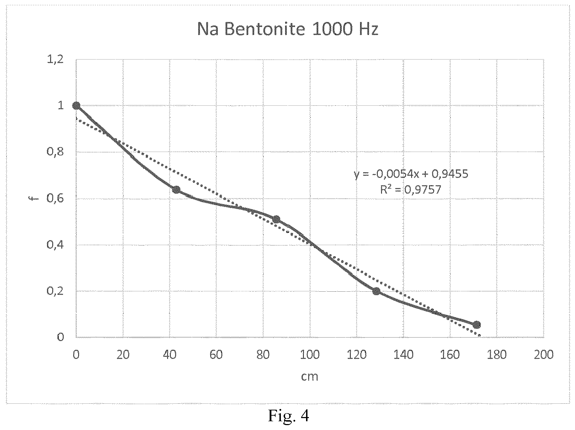

The linear extrapolation curve for sodium activated bentonite as insulator material is shown in Fig. 4.
The height of the sodium activated bentonite required necessary to extinguish completely the noise generated at 1 000 Hz is $h_{ex}$ = 17 cm (at f = 0) and a density of d = 170 L/m$^2$ (at f = 0). Thus, an inorganic powder material with the described particle size distribution, moisture content and bulk density is definitely a good candidate as insulator material for sound and/or noise reducing at a frequency of 1 000 Hz.

**Table 8b:** Results of the noise measurements using sodium activated bentonite as insulator material

| Frequency (Hz) | amount of product by weight (kg/m²) | Bulk (kg/L) | amount of product by volume (L/m²) | I0 (DB) | I1 (DB) | I2 (DB) | f (-) |
|---|---|---|---|---|---|---|---|
| 100 | | | | | 80 | | 1 |
| | 30 | 0.7 | 42.9 | 25 | 80 | 60 | 0.64 |

The height of the sodium activated bentonite required necessary to extinguish completely the noise generated at 100 Hz is $h_{ex}$ = 28 cm (at f = 0) and a density of d = 280 L/m² (at f = 0). Thus, an inorganic powder material with the described particle size distribution, moisture content and bulk density is definitely a good candidate as insulator material for sound and/or noise reducing also at a frequency of 100 Hz.

**Example 9 (invention):**

1) Insulator material tested: barium sulfate (baryt), characteristics of the Barium sulfate used:

Moisture content: 0.4 wt.-%

- $d_{98}$ = 48.2 $\mu$m
- $d_{90}$ = 13 $\mu$m
- $d_{50}$ = 3.15 $\mu$m
- $d_{10}$ = 0.46 $\mu$m
- steepness factor = 3.5
- $d_{50}$ particle volume = 0.00007875 mL
- Bulk density: 1.66 kg/L

2) Frequency used to conduct the series of experiments: 1 000 Hz.

**Table 9:** Results of the noise measurements using barium sulfate as insulator material

| Frequency (Hz) | amount of product by weight (kg/m²) | Bulk (kg/L) | amount of product by volume (L/m²) | I0 (DB) | I1 (DB) | I2 (DB) | f (-) |
|---|---|---|---|---|---|---|---|
| 1 000 | | | | | | | 1 |
| | 40 | 1.66 | 24.1 | 17 | 100 | 85 | 0.82 |
| | 100 | 1.66 | 60.2 | 17 | 100 | 81 | 0.77 |

The height of the barium sulfate required necessary to extinguish completely the noise generated at 1 000 Hz is $h_{ex}$ = 27 cm (at f = 0) and a density of d = 270 L/m² (at f = 0). Thus, an inorganic powder material with the described particle size distribution, moisture content and bulk density is definitely a good candidate as insulator material for sound and/or noise reducing.

**Claims**

1. Noise and/or sound-reducing multilayer unit for reducing noise having a wavelength from 50 to 15 000 Hz, preferably from 100 to 10 000 Hz, and most preferably from 100 to 7 000 Hz, the noise and/or sound-reducing multilayer unit comprising at least one solid back layer and at least one solid front layer which are arranged such that one or more space(s) is/are formed between the solid back and front layers, and the one or more space(s) is/are at least partially filled with an inorganic powder material forming one or more noise and/or sound-reducing layer(s), wherein the one or more inorganic powder material forming noise and/or sound-reducing layer(s) has/have in sum an average thickness of 0.1 to 100 cm, wherein

a) the at least one solid back layer and the at least one solid front layer are configured such that they are suitable for holding the one or more noise and/or sound-reducing layer(s) in position, and

b) the inorganic powder material has

   i) a bulk density in the range from 0.4 to 2.0 kg/L, and
   ii) a weight particle size $d_{90}$ of < 2 000 $\mu$m, and
   iii) a weight median particle size $d_{50}$ in the range from 0.2 to 1 500 $\mu$m, and
   iv) a weight particle size $d_{10}$ in the range from 0.1 to 200 $\mu$m, and
   v) a steepness factor $[(d_{10}/d_{90})*100]$ in the range from 2 to 50
   vi) a moisture content of $\leq$ 15.0 wt.-%, based on the total weight of the inorganic powder material.

2.  The noise and/or sound-reducing multilayer unit according to claim 1, wherein the noise and/or sound-reducing multilayer unit further comprises

    a) one or more intermediate layer(s) positioned between the at least one solid front and at least one solid back layer and separating two adjacent noise and/or sound-reducing layers from each other, and/or
    b) one or more side layer(s) configured such that the one or more noise and/or sound-reducing layer(s) are hold in position, and/or
    b) a top layer, and/or
    c) a bottom layer and
    d) optionally at least one layer is of honeycomb shape.

3.  The noise and/or sound-reducing multilayer unit according to claim 1 or 2, wherein the multilayer unit is a three- to twenty-layer unit, preferably a three-to ten-layer unit, and more preferably a three- to five-layer unit.

4.  The noise and/or sound-reducing multilayer unit according to any one of claims 1 to 3, wherein the at least one solid back layer and the at least one solid front layer of the noise and/or sound-reducing multilayer unit are the same or different, preferably the at least one solid back layer and the at least one solid front layer are made of metal and/or wood and/or concrete and/or brick stone and/or plastic, particularly the at least one solid back layer and the at least one solid front layer are in plate form and/or wire form and/or of honeycomb shape oriented vertically, horizontally or in any form.

5.  The noise and/or sound-reducing multilayer unit according to any one of claims 1 to 4, wherein each of the at least one solid back layer and at least one solid front layer

    a) has the same or different stiffness, preferably a stiffness of at least 10 mNm, more preferably of at least 100 mNm, and most preferably of at least 500 mNm, and/or
    b) has the same or different average thickness, preferably an average thickness in the range from 1 to 120 cm, more preferably in the range from 2 to 100 cm, more preferably from 5 to 50 cm.

6.  The noise and/or sound-reducing multilayer unit according to any one of claims 1 to 5, wherein

    a) the one or more noise and/or sound-reducing layer(s) comprise(s) of at least 90 wt.% of the inorganic powder material, and/or
    b) the inorganic powder material is selected from the group comprising baryt, such as natural baryt or synthetic baryt, talc, mica, clay, kaolin, titanium dioxide, bentonite, magnesite, satin white, silicates, calcium carbonate-comprising materials, such as natural calcium carbonate, synthetic calcium carbonate, surface modified calcium carbonate and materials comprising calcium carbonate such as dolomite or mixed carbonate based materials of such as mixture, and mixtures thereof; preferably baryt, such as natural baryt or synthetic baryt, talc, mica, clay, bentonite, silicates, calcium carbonate-comprising materials, such as natural calcium carbonate, more preferably marble, limestone and/or chalk, and materials comprising calcium carbonate such as dolomite, and mixtures thereof.

7.  The noise and/or sound-reducing multilayer unit according to any one of claims 1 to 6, wherein the inorganic powder material has

    i) a bulk density in the range from 0.6 to 1.8 kg/L, and/or
    ii) a moisture content of < 5 wt.%, preferably of < 2 wt.-%, based on the total weight of the inorganic powder material, and/or

iii) a weight particle size $d_{90}$ of < 1 500 $\mu$m, preferably in the range from 4 to 1 500 $\mu$m, more preferably in the range from 10 to 1 000 $\mu$m, and

iv) a weight median particle size $d_{50}$ in the range from 0.2 $\mu$m to 1 200 $\mu$m, preferably in the range from 0.2 to 900 $\mu$m, more preferably in the range from 0.2 to 750 $\mu$m, and most preferably in the range from 0.2 to 500 $\mu$m, and

v) a weight particle size $d_{10}$ in the range from 0.1 to 175 $\mu$m, preferably in the range from 0.1 to 150 $\mu$m.

8. The noise and/or sound-reducing multilayer unit according to any one of claims 1 to 7, wherein the inorganic powder material has a steepness factor $[(d_{10}/d_{90})*100]$ in the range from 2.5 to 30.

9. The noise and/or sound-reducing multilayer unit according to any one of claims 1 to 8, wherein the inorganic powder material has a ratio of steepness factor to bulk density, expressed by a quotient obtained by dividing the steepness factor $[(d_{10}/d_{90})*100]$ to bulk density [steepness factor/bulk density (kg/L)], of $\leq$ 30, preferably in the range from 0.5 to 25, more preferably in the range from 0.8 to 20 and most preferably in the range from 1 to 15.

10. The noise and/or sound-reducing multilayer unit according to any one of claims 1 to 9, wherein the noise and/or sound-reducing layer formed by the inorganic powder material has an average layer thickness in the range from 1 to 100 cm, preferably in the range from 10 cm to 80 cm, more preferably in the range from 12 to 60 cm and most preferably in the range from 13 to 40 cm.

11. The noise and/or sound-reducing multilayer unit according to any one of claims 1 to 10, wherein the inorganic powder material comprises a hydrophilic or hydrophobic treatment layer on the surface of the inorganic powder material.

12. Method for the preparation of a noise and/or sound-reducing multilayer unit, the method comprising at least the steps of:

a) providing at least one solid back layer and at least one solid front layer as defined in any one of claims 1 or 5,
b) providing an inorganic powder material as defined in any one of claims 1 or 6 to 11,
c) arranging the back and front layers of step a) such that a space is formed between the back and front layers, and
d) filling the inorganic powder material of step b) at least partially into the space formed between the back and front layers such as to form a noise and/or sound-reducing multilayer unit.

13. The method according to claim 12, wherein the method further comprises

i) a step c1), preferably carried out after step c) and/or before step d), of arranging one or more intermediate layer(s) such that they are positioned between the at least one solid front layer and the at least one solid back layer, and/or
ii) a step c2), preferably carried out after step c) and/or before step d), of arranging one or more side layer(s) such that they are positioned at one or more open sides of the noise and/or sound-reducing multilayer unit, and/or
iii) a step c3) preferably carried out after step d), of arranging a top layer such that it is positioned on the top of the noise and/or sound-reducing multilayer unit, and/or
iv) a step c4), preferably carried out before step c), of arranging a bottom layer such that it is positioned at the bottom of the noise and/or sound-reducing multilayer unit.

14. Noise and/or sound-protection wall comprising one or more noise and/or sound-reducing multilayer unit(s) according to any one of claims 1 to 11.

15. Use of an inorganic powder material as defined in any one of claims 1 or 6 to 11 as noise and/or sound-reducing material.

16. Use of an inorganic powder material as defined in any one of claims 1 or 6 to 11 for the preparation of a noise and/or sound-protection wall.

**Figures**

R = sound receiver
(where the noise is
measured)
Q = sound generator
    (2 loudspeakers)
A = empty chamber
B = chamber receiving
    the insulator
material
▪ ▪ ▮  = wire grid

c

R

B

A

Q     Q

d

a

b

Fig. 1

Fig. 2

Fig. 3

Na Bentonite 1000 Hz

$y = -0,0054x + 0,9455$
$R^2 = 0,9757$

Fig. 4

Europäisches
Patentamt

European
Patent Office

Office européen
des brevets

# EUROPEAN SEARCH REPORT

Application Number

EP 18 15 9996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 509 603 A1 (MATSUSHITA ELECTRIC WORKS LTD [JP]) 21 October 1992 (1992-10-21)<br>* abstract; figures 3, 4, 10-16 *<br>* columns 4, 6, 8 *<br>----- | 1-16 | INV.<br>G10K11/168<br>B32B1/00<br>E04B1/82 |
| A | EP 2 818 784 A1 (NICHIAS CORP [JP]) 31 December 2014 (2014-12-31)<br>* paragraphs [0015], [0048] - [0056], [0068] *<br>----- | 1-16 | |
| A | US 3 894 169 A (MILLER DARROW L) 8 July 1975 (1975-07-08)<br>* column 5, line 37 - column 6, line 16 *<br>* column 7, line 43 - line 67 *<br>----- | 1-16 | |
| A | EP 2 910 610 A1 (OMYA INT AG [CH]) 26 August 2015 (2015-08-26)<br>* paragraphs [0001], [0035] - [0037], [0057], [0058], [0142] - [0146], [0213] - [0219] *<br>----- | 1-16 | |

TECHNICAL FIELDS
SEARCHED (IPC)

G10K
B32B
E04B

The present search report has been drawn up for all claims

| Place of search | Date of completion of the search | Examiner |
|---|---|---|
| The Hague | 12 September 2018 | Vollmer, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 9996

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2018

| Patent document cited in search report | | Publication date | Patent family member(s) | | Publication date |
|---|---|---|---|---|---|
| EP 0509603 | A1 | 21-10-1992 | DE | 69232053 D1 | 18-10-2001 |
| | | | DE | 69232053 T2 | 06-06-2002 |
| | | | EP | 0509603 A1 | 21-10-1992 |
| | | | US | 5304415 A | 19-04-1994 |
| EP 2818784 | A1 | 31-12-2014 | CN | 104136823 A | 05-11-2014 |
| | | | EP | 2818784 A1 | 31-12-2014 |
| | | | JP | 5980306 B2 | 31-08-2016 |
| | | | JP | WO2013125411 A1 | 30-07-2015 |
| | | | KR | 20140124400 A | 24-10-2014 |
| | | | WO | 2013125411 A1 | 29-08-2013 |
| US 3894169 | A | 08-07-1975 | NONE | | |
| EP 2910610 | A1 | 26-08-2015 | AU | 2015220955 A1 | 25-08-2016 |
| | | | CA | 2939144 A1 | 27-08-2015 |
| | | | CL | 2016002095 A1 | 24-02-2017 |
| | | | CN | 106029792 A | 12-10-2016 |
| | | | DK | 2910610 T3 | 25-09-2017 |
| | | | EP | 2910610 A1 | 26-08-2015 |
| | | | EP | 3107967 A1 | 28-12-2016 |
| | | | ES | 2640099 T3 | 31-10-2017 |
| | | | HR | P20171368 T1 | 03-11-2017 |
| | | | HU | E034671 T2 | 28-02-2018 |
| | | | JP | 6310089 B2 | 11-04-2018 |
| | | | JP | 2017512849 A | 25-05-2017 |
| | | | KR | 20160124202 A | 26-10-2016 |
| | | | PL | 2910610 T3 | 29-12-2017 |
| | | | PT | 2910610 T | 15-09-2017 |
| | | | RU | 2647026 C1 | 13-03-2018 |
| | | | SI | 2910610 T1 | 30-10-2017 |
| | | | TW | 201544555 A | 01-12-2015 |
| | | | US | 2017009076 A1 | 12-01-2017 |
| | | | WO | 2015124494 A1 | 27-08-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202006003050
- FR 2902808 A1
- EP 3214224 A1
- US 20040097616 A1